# EUROPÄISCHE PATENTANMELDUNG

(11) **EP 4 438 773 A1**
(43) Veröffentlichungstag der Anmeldung: **02.10.2024**
(21) Anmeldenummer: 23164605.0
(22) Anmeldetag: 28.03.2023
(51) Int. Cl.: C25B 13/08

(54) **BESCHICHTEN VON ANIONENAUSTAUSCHMEMBRANEN**

(71) Anmelder: Evonik Operations GmbH, 45128 Essen (DE)
(72) Erfinder: MERKULOV, Sonja, 45770 Marl (DE); WATZELE, Sebastian, 45657 Recklinghausen (DE); WILD, Andreas, 45721 Haltern am See (DE)
(74) Vertreter: Evonik Patent Association

(57) **Zusammenfassung**

Die Erfindung befasst sich mit dem Beschichten von Anionenaustauschmembranen mit katalytisch aktiven Substanzen. Die katalytisch aktiv beschichteten Anionenaustauschmembranen werden in elektrochemischen Zellen eingesetzt, insbesondere zur Wasserelektrolyse. Der Erfindung liegt die Aufgabe zu Grunde, ein Verfahren zur Beschichtung einer Anionenaustauschmembran anzugeben, welches bei geringeren Temperaturen durchführbar ist. Gelöst wird diese Aufgabe durch einen Quellschritt. Abgesehen von dem Quellschritt und den Verarbeitungstemperatur gleicht der Ablauf des erfindungsgemäßen Verfahrens einem Decal-Prozess. Durch die Verwendung des teilweise flüssigen Quellmittels ist der erfindungsgemäße Prozess allerdings als nass aufzufassen. Das Verfahren ermöglicht die Verarbeitung von Anionen leitenden Polymere bei moderaten Temperaturen. Die Anionen leitenden Polymere können in der Anionenaustauschmembran enthalten sein und/oder in der Zusammensetzung, die auf die Anionenaustauschmembran aufgetragen wird. Der Vorteil des erfindungsgemäßen Verfahrens ist, dass es bei vergleichsweise geringen Temperaturen durchgeführt werden kann, nämlich unter 100°C.

## Beschreibung

Die Erfindung befasst sich mit dem Beschichten von Anionenaustauschmembranen mit katalytisch aktiven Substanzen. Die katalytisch aktiv beschichteten Anionenaustauschmembranen werden in elektrochemischen Zellen eingesetzt, insbesondere zur Wasserelektrolyse.

Anionenaustauschmembranen (engl.: anion exchange membranes - AEM) werden in elektrochemischen Zellen verbaut. Sie dienen in der Regel dazu, ein Vermischen von in der Zelle produzierten Substanzen wie Wasserstoff und Sauerstoff zu verhindern und dabei gleichzeitig den ionischen Ladungstransport zu ermöglichen. Die in der Zelle praktizierten elektrochemischen Reaktionen werden dadurch effizienter und deutlich sicherer.

Ein Beispiel für einen elektrochemischen Prozess, der mit Hilfe einer Anionenaustauschmembran durchgeführt wird, ist die Herstellung von Wasserstoff und Sauerstoff durch alkalische Wasserspaltung. Dabei wird eine Anionenaustauschmembran als Separator zwischen den Elektroden der Zelle eingesetzt. Deswegen wird das Verfahren auch als AEM basierte Wasserspaltung (engl. AEM water electrolysis, AEMWE) bezeichnet. Da die Reaktion im alkalischen Milieu erfolgt, wird die AEM basierte Wasserspaltung auch oft alkalische Membranwasserelektrolyse (engl. alkaline membrane water electrolysis) genannt.

Bei der AEM basierten Wasserspaltung wird eine elektrochemische Zelle mit Wasser beziehungsweise mit einem basischen Elektrolyten auf Wasserbasis gefüllt und eine Spannung zwischen Anode und Kathode angelegt. Auf Kathodenseite wird das Wasser (H₂O ) in Wasserstoff (H₂) und Hydroxid-Ionen (OH⁻) zerlegt (Gleichung K). Die Anionenaustauschmembran transportiert die Hydroxid-Ionen auf die Anodenseite, wo diese zu Sauerstoff (O₂) oxidiert werden (Gleichung A). Auf diese Weise entsteht auf der Anodenseite Sauerstoff, währenddessen das Wasserstoff auf der Kathodenseite entsteht. Folglich wird die Anodenseite auch Sauerstoffseite genannt, währenddessen die Kathodenseite auch Wasserstoffseite heißt.

2 H₂O + 2 e⁻ → H₂ + 2 OH⁻ (K) Reduktion / Kathodenreaktion

2 OH- → ½ O₂ + H₂O + 2 e⁻ (A) Oxidation / Anodenreaktion

Um den beschriebenen Effekt zu ermöglichen, muss die Anionenaustauschmembran zwischen Anode und Kathode die Hydroxid-Ionen leiten. Zugleich muss sie elektrisch isolieren, damit es nicht zu einem elektrischen Kurzschluss zwischen Anode und Kathode kommt. Schließlich muss die Anionenaustauschmembran nach Möglichkeit gasdicht sein, damit es nicht zu einer Rückvermischung der entstehenden Gase kommt. Zudem muss die Anionenaustauschmembran den alkalischen Bedingungen, die in der AEM Wasserspaltung herrschen, Stand halten. Diese Eigenschaften werden von speziellen anionen leitenden Polymeren (auch genannt: Anionenleitfähige lonomere) erfüllt.

Um die Reaktion zu beschleunigen, werden sowohl auf kathodischer als auch auf anodischer Seite katalytisch aktive Substanzen (auch genannt: Elektrokatalysatoren) eingebaut. Dies geschieht durch Einbringen von katalytisch aktiven Schichten in die Zelle oder durch katalytisch aktive Beschichtungen von Zellbauteilen. Diese können sich auf einem eigens dafür in die Zelle eingebrachten Substratmaterial oder auf einer porösen Transportschicht befinden (engl. catalyst-coated substrate, CCS) oder aber die Membran kann direkt mit katalytisch aktivem Material beschichtet sein (engl. catalyst-coated membrane, CCM).

Einen hervorragenden Überblick über Aufbau und Werkstoffe der gegenwärtig in der AEM basierten Wasserspaltung eingesetzten elektrochemischen Zellen bieten:
Miller, Hamish Andrew et al: Green hydrogen from anion exchange membrane water electrolysis: a review of recent developments in critical materials and operating conditions. Sustainable Energy Fuels, 2020, 4, 2114 DOI: 10.1039/c9se01240k

Nachdem grundsätzliche Fragen der Materialwahl und der Betriebsbedingungen geklärt sind, stellt sich bei der Entwicklung von Anlagen zum Betrieb von elektrochemischen Prozessen das Problem, wie einzelne Bestandteile der elektrochemischen Zellen im industriellen Maßstab gefertigt werden können.

So ist es im Interesse der Energieeffizienz, den Innenwiderstand der elektrochemischen Zelle möglichst gering zu halten. Dies kann mit einem kompakten Aufbau ermöglicht werden, indem die Elektroden besonders dicht an dem Separator platziert werden und der Elektrokatalysator auch möglichst dicht an der jeweiligen Elektrode platziert wird.

Ein Weg, diesen kompakten Aufbau zu erreichen, ist die bereits erwähnte CCM-Bauweise, bei der die Anionenaustauschmembran mit einer Beschichtung versehen wird, die katalytisch aktives Material enthält. So präpariert, bringt die Anionenaustauschmembran beim Zusammenbau der Zelle den Katalysator gleich mit. Auf diese Weise entfällt bei der Assemblierung der Zelle das Handhaben der Katalysators und es wird ein kompakter Zellaufbau erreicht, der einen geringen Innenwiderstand verspricht.

Bei der Beschichtung von Anionenaustauschmembranen mit Elektrokatalysatoren ist zu beachten, dass es sich bei Substrat (Membran) und Beschichtungsstoff (Katalysator) um sehr unterschiedliche Materialien handelt: Die Membran besteht in der Regel aus einem ionenleitenden Spezial-Polymer (lonomer) in Gestalt einer Folie, währenddessen als Elektrokatalysator meist Metalle, Metalloxide oder metallorganische Komplexe in partikulärer Form eingesetzt werden. Um die katalytisch aktiven Partikel auf der Folie zu immobilisieren, werden polymere Haftvermittler eingesetzt, welche die Partikel mit der Membran verkleben. Bei den Haftvermittlern kann es sich auch um lonomere handeln, aus einem Material wie die Anionenaustauschmembran.

Aufgrund der Heterogenität der beteiligten Materialien ist die Herstellung von CCM nicht trivial. Anspruchsvoll ist auch die Handhabung der Materialien während der Beschichtung.

Ein, sowohl in der Manufaktur, als auch in der industriellen Produktion von CCM praktiziertes Verfahren ist das so genannte Decal-Verfahren. Dabei wird der Katalysator zunächst mit einem thermoplastischen Haftvermittler zu einer Beschichtungsmasse vermengt und diese auf ein Transfersubstrat - meist eine Folie aus PTFE (Polytetrafluorethylen) - aufgetragen. Sodann wird das beschichtete Transfersubstrat mit der Anionenaustauschmembran verpresst und erhitzt. Der Thermoplast schmilzt dabei an und verklebt die Katalysatorpartikel mit der Membran. Das Transfersubstrat wird anschließend wie ein Abziehbild (engl.: decal) von der Membran abgezogen und verworfen. Auf der Membran verbleibt eine Beschichtung, die aus dem Haftvermittler und den darin immobilisierten Katalysatorpartikeln besteht.

Sowohl in der wissenschaftlichen Literatur, als auch in der Patentliteratur sind bereits decal-Prozesse vorbeschrieben:
So offenbart etwa die US 20050072514 A1 einen decal-Prozess mit einem umlaufenden, wiederverwerteten Transferband zum Beispiel aus PTFE. Auf dem Transferband wird ein Gemisch aus einem ionisch leitendem Material, einem Katalysator und ein Lösemittel aufgetragen. Das Transferband mit dem darauf aufgetragenen Gemisch wird mit einer bandförmig bereitgestellten, flachen Membran heiß verpresst und das Transferband abgezogen. Das Transferband wird nach dem Abziehen mit einem Lösemittel gereinigt und wiederverwertet. Das Verpressen erfolgt bei einer Temperatur oberhalb der Glastemperatur des lonomers und unterhalb der Glastemperatur des Transferbandes.

Nachteil dieses Verfahrens ist, dass die Glastemperatur des lonomers beim Verpressen überschritten werden muss. Da einige lonomere sehr temperaturempfindlich sind, lässt sich mit diesem Verfahren nur eine eingeschränkte Auswahl von lonomeren verarbeiten.

Da die Temperaturempfindlichkeit der lonomere auch bei anderen Prozessen zur Herstellung von Bauteilen für elektrochemische Zellen ebenfalls mit Schwierigkeiten verbunden ist, wurden bereits lonomere entwickelt, die eine besonders geringe Glastemperatur aufweisen:
So beschreiben etwa Minkyu Kyeong et al. einen lonomer mit einer geringeren Glastemperatur:
Minkyu Kyeong, Ji Eon Chae, So Young Lee, Tae-Hoon Lim, Minsung Kim, Sang-Soo Lee, Kwang Ho Song, Hyoung-Juhn Kim: Development of Poly(Arylene ether Sulfone)-Based blend membranes containing aliphatic moieties for the low-temperature decal transfer method. Journal of Membrane Science, Volume 660, 2022, 120853, ISSN 0376-7388 DOI 10.1016/j.memsci.2022.120853.

Dieses lonomer ist jedoch Protonen leitend und lässt sich daher in einer AEM-Wasserelektrolysezelle nicht einsetzen.

Es ist auch bekannt, die lonomere in Gegenwart von organischen Lösemitteln zu verarbeiten:
So beschreibt die JP 2007095582 A einen decal-Prozess mit einer Protonen leitenden Membran, die bei erhöhten Temperaturen von 130°C verpresst wird. Das Verpressen erfolgt in einer lösemittelhaltigen Atmosphäre. Auch dieses Verfahren eignet sich nicht zur Verarbeitung von temperaturempfindlichen Anionen leitenden Polymeren.

Young Jun Yoon et al. beschreiben einen decal-Prozess, der in Gegenwart von 1-pentanol durchgeführt wird:
Young Jun Yoon, Tae-Ho Kim, Sang Un Kim, Duk Man Yu, Young Taik Hong: Low temperature decaltransfer method for hydrocarbon membrane based membrane electrode assemblies in polymer electrolyte membrane fuel cells. Journal of Power Sources, Volume 196, Issue 22, 2011, Pages 9800-9809, ISSN 0378-7753, DOI: 10.1016/j.jpowsour.2011.08.038.

Die Temperatur bei diesem Prozess beträgt lediglich 110°C, was dem verwendeten Protonen leitenden Polymer nicht schadet. Für manche Anionen leitenden Polymere ist eine Temperatur von 110°C aber immer noch zu hoch. Darüber hinaus sind Anionen leitende Polymer bekannt, die vor dem Erreichen ihrer Glasübergangstemperatur degradieren, sodass sie nicht übertragen werden können.

In Hinblick auf diesen Stand der Technik liegt der Erfindung die Aufgabe zu Grunde, ein Verfahren zur Beschichtung einer Anionenaustauschmembran anzugeben, welches bei geringeren Temperaturen durchführbar ist und welches sich insbesondere auch für die Übertragung solcher Anionen leitenden Polymers anwendbar ist, die vor dem Erreichen ihrer Glasübergangstemperatur degradieren.

Gelöst wird diese Aufgabe durch ein Verfahren, umfassend die folgenden, nicht chronologischen Schritte:
a) Bereitstellen einer flachen Anionenaustauschmembran welche einen Membranwerkstoff enthält oder daraus besteht;
b) Bereitstellen eines ersten flachen Transfersubstrats, welches zumindest einseitig mit einer ersten Zusammensetzung beschichtet ist, wobei die erste Zusammensetzung mindestens ein erstes Polymer und mindestens eine erste katalytisch aktive oder katalytisch aktivierbare Substanz enthält;
c) Bereitstellen eines ersten Quellmittels, welches zumindest teilweise in flüssiger Form vorliegt;
d) Auftragen des ersten Quellmittels auf die erste Zusammensetzung und/oder auf die Anionenaustauschmembran;
g) Quellen des ersten Polymers mit dem ersten Quellmittel;
e) Verpressen der ersten Zusammensetzung mit der Anionenaustauschmembran in Gegenwart des ersten Transfersubstrats, wobei die Temperatur der ersten Zusammensetzung beim Verpressen zwischen -90°C und 100°C beträgt;
f) Abschälen des ersten Transfersubstrats von der ersten Zusammensetzung, sodass eine Anionenaustauschmembran erhalten wird, welche auf einer Seite mit der ersten Zusammensetzung beschichtet ist.

Ein solches Verfahren ist Gegenstand der Erfindung.

Der Vorteil des erfindungsgemäßen Verfahrens ist, dass es bei vergleichsweise geringen Temperaturen durchgeführt werden kann, nämlich unter 100°C. Anionen leitende Polymere sind nämlich häufig temperaturempfindlich und sollten daher nicht über 100°C verarbeitet werden. Außerdem lassen sich mit diesem Verfahren solche Anionen leitende Polymere verarbeiten, deren Glasübergangstemperatur höher liegt. Theoretisch ist es auch möglich, das Verpressen in gekühlter Umgebung zu vollführen, bei Temperaturen bis zu -90°C. Darunter sind bekannte lonomere zu spröde, um verarbeitet werden zu können. Zudem fangen die Quellmittel an zu gefrieren. Die Temperatur beim Verpressen beträgt optimalerweise zwischen -30°C und 80°C oder zwischen -15°C und 70°C.

Im erfindungsgemäßen Verfahren ermöglicht das Quellmittel die Verarbeitung der Anionen leitenden Polymere bei solch moderaten Temperaturen. Die Anionen leitenden Polymere können in der Anionenaustauschmembran enthalten sein und/oder in der Zusammensetzung, die auf die Anionenaustauschmembran aufgetragen wird.

Bei dem Quellmittel handelt es sich um eine Substanz, die zumindest teilweise in flüssiger Form vorliegt und das in der Zusammensetzung enthaltene Polymer quillt, wenn es mit dem Polymer in Kontakt kommt. Unter Quellen ist zu verstehen, dass das Quellmittel in das Polymer eindringt und es aufweitet. Das Volumen des Polymers nimmt daher bei Kontakt mit dem Quellmittel kontinuierlich zu, währenddessen das Quellmittel in das Polymer eindringt. Das Quellen ist folglich ein Prozess, der eine gewisse Zeit erfordert. Zu Quellmitteln zählen auch Substanzen, oder Gemische von Substanzen die das Polymer auflösen. Zu dem Kontakt zwischen Polymer und Quellmittel kommt es bei dem Auftragen des Quellmittels auf die Zusammensetzung bzw. beim Verpressen. Das Quellen kann also gleichzeitig mit dem Auftragen und/oder dem Verpressen erfolgen, kann aber auch früher oder später stattfinden. Auf die Chronologie der Schrittabfolge kommt es nicht an. Insbesondere muss das Quellen nicht separat geschehen, es kann auch zeitgleich mit anderen Verfahrensschritten erfolgen. Das Verfahren kann auch Haltephasen enthalten, in denen dem Quellmittel Zeit gegeben wird, das Polymer zu quellen. Eine chemische Reaktion zwischen Quellmittel und Polymer ist beim Quellen nicht notwendig, aber auch nicht ausgeschlossen. Insbesondere ist es möglich, dass das Quellmittel das Polymer teilweise oder komplett löst. Wichtig ist, dass das Quellmittel zumindest teilweise in flüssiger Form vorliegt, wenn es mit dem Polymer in Kontakt kommt. So wird das Quellen begünstigt. Das Quellmittel kann auch teilweise in der Gasphase vorliegen, hat dann aber weniger effektiven Kontakt mit dem Polymer, weswegen dieses langsamer quillt. Im Interesse einer hohen Prozesseffektivität ist daher die Verwendung eines flüssigen Quellmittels.

Abgesehen von dem Quellschritt und der Verarbeitungstemperatur gleicht der Ablauf des erfindungsgemäßen Verfahrens einem Decal-Prozess. Durch die Verwendung des teilweise flüssigen Quellmittels ist der erfindungsgemäße Prozess allerdings als nass aufzufassen. Dennoch kann auf einen langwierigen und energieintensiven Trocknungsschritt verzichtet werden, weil das Quellmittel lediglich in geringen Mengen eingesetzt wird und sich unter Umgebungsbedingungen mit der Zeit verflüchtigt. Dies gilt insbesondere für Quellmittel mit niedrigem Siedepunkt, wie etwa Ethanol.

Grundsätzlich werden in dem erfindungsgemäßen Prozess Anionenaustauschmembranen in flacher Gestalt verarbeitet. Flach bedeutet hier, dass die Höhe (bzw. Stärke) der Anionenaustauschmembran viel geringer ist als die Länge und die Breite. Die Anionenaustauschmembranen weist somit eine im Wesentlichen zweidimensionale Gestalt auf. Etwaige Prägungen in der Oberfläche der Membran ändern nichts an ihrer flachen Gestalt. Es handelt sich mithin um eine Flachmembran. Das Transfersubstrat ist in analoger Weise ebenfalls flach.

In dem erfindungsgemäßen Verfahren wird die Anionenaustauschmembran zumindest auf einer Seite mit einer ersten Zusammensetzung beschichtet. Da Anionenaustauschmembranen meist in elektrochemischen Zellen eingesetzt werden, die zwei von der Membran getrennte Kompartimente umfasst, welche jeweils mit einem Elektrokatalysator gefüllt sind, macht es Sinn, die Anionenaustauschmembran beidseitig zu beschichten. Genauer gesagt, wird die Anionenaustauschmembran auf der einen Seite mit der ersten Zusammensetzung beschichtet und auf der anderen Seite mit einer zweiten Zusammensetzung. Die erste Zusammensetzung enthält dann beispielsweise den Katalysator für die Kathodenreaktion (K) und die zweite Zusammensetzung den Katalysator für die Anodenreaktion (A). Im Erfindungsgemäßen Verfahren ist das möglich und zwar sowohl simultan als auch seriell.

Gemäß einer bevorzugten Weiterbildung der Erfindung umfasst das Verfahren zusätzlich noch die folgenden, nicht chronologischen Schritte:
h) Bereitstellen eines zweiten flachen Transfersubstrats, welches zumindest einseitig mit einer zweiten Zusammensetzung beschichtet ist, wobei die zweite Zusammensetzung mindestens ein zweites Polymer und mindestens eine zweite katalytisch aktive oder katalytisch aktivierbare Substanz enthält;
i) Bereitstellen eines zweiten Quellmittels, welches zumindest teilweise in flüssiger Form vorliegt;
j) Auftragen des zweiten Quellmittels auf die zweite Zusammensetzung und/oder auf die Anionenaustauschmembran;
k) Quellen des zweiten Polymers mit dem zweiten Quellmittel;
l) Verpressen der zweiten Zusammensetzung mit der Anionenaustauschmembran in Gegenwart des zweiten Transfersubstrats, wobei die Temperatur der zweiten Zusammensetzung beim Verpressen zwischen -90°C und 100°C beträgt;
m) Abschälen des zweiten Transfersubstrats von der zweiten Zusammensetzung, sodass eine Anionenaustauschmembran erhalten wird, welche auf einer Seite mit der ersten Zusammensetzung beschichtet ist und welche auf der anderen Seite mit der zweiten Zusammensetzung beschichtet ist.

Ein solches Verfahren zielt mithin auf die beidseitige Beschichtung der Anionenaustauschmembran ab: Auf der einen Seite erfolgt die Beschichtung mit der ersten Zusammensetzung, auf der anderen Seite wird die zweite Zusammensetzung aufgetragen. Die erste und zweite Zusammensetzung weisen vorzugsweise eine unterschiedliche Rezeptur auf; die Rezepturen können sich insbesondere durch den enthaltenen Katalysator unterscheiden. Die beiden Zusammensetzungen können aber auch im Wesentlichen identisch sein.

Vorzugsweise erfolgt das Verpressen der ersten Zusammensetzung mit der Anionenaustauschmembran in Gegenwart des zweiten Transfersubstrats und das Verpressen der zweiten Zusammensetzung mit der Anionenaustauschmembran in Gegenwart des ersten Transfersubstrats. Mithin werden beide Zusammensetzungen simultan mit der Membran verpresst. Das steigert die Effizienz des Prozesses.

Der Druck beim Verpressen sollte zwischen 0.001 MPa bis 0.15 MPa betragen. Vorzugsweise erfolgt das Verpressen bei einem Druck von 0.01 MPa bis 0.05 MPa. Die angegebenen

Druckbereiche gelten sowohl für das Verpressen der ersten Zusammensetzung mit der Anionenaustauschmembran als auch für das Verpressen der zweiten Zusammensetzung mit der Anionenaustauschmembran. Wenn beide Zusammensetzungen gleichzeitig in Gegenwart ihrer jeweiligen Transfersubstrate verpresst werden, wirkt notwendigerweise derselbe Druck auf das gesamte Laminat. In diesem Zusammenhang soll nicht unerwähnt bleiben, dass herkömmliche Decal-Verfahren mit Drücken von 0.3 MPa bis 10 MPa arbeiten. Im erfindungsgemäßen Verfahren herrschen mithin deutlich geringere Drücke.

Es gibt unterschiedliche Optionen, wie das erste Quellmittel aufgebracht werden kann. Es kann wahlweise ausschließlich auf die erste Zusammensetzung werden oder ausschließlich auf die Anionenaustauschmembran oder auf beides. Sofern ein zweites Quellmittel verwendet wird, ergeben sich dafür die analogen Optionen. Die Wahl des Auftragsorts hängt von dem Quellverhalten des Quellmittels in dem zugehörigen Polymer ab.

Ein besonderer Vorteil des erfindungsgemäßen Verfahrens ist im Übrigen, dass sich das Transfersubstrat von dem gequollenen Polymer besonders leicht abschälen lässt. Daher gestattet es das erfindungsgemäße Verfahren ein Transfersubstrat aus einem fluorfreien Polymer zu verwenden. Bekannte decal-Prozesse benutzen nämlich als Transfersubstrat in der Regel Fluorpolymer-Folien, etwa aus PTFE, um die Haftung zu verringern und dadurch das Abziehen zu erleichtern. Da das Transfersubstrat in der Regel verworfen wird, ist die Verwendung von Fluorpolymeren aus Umweltschutzgründen bedenklich. Im erfindungsgemäßen Verfahren lässt sich dahingegen ein Transfersubstrat aus einem unbedenklichen, preiswerten, fluorfreien Polymer wie etwa Polyethylen (PE) oder Polypropylen (PP) oder Polyethylenterephthalat (PET) verwenden. Eine besondere Ausführungsform der Erfindung ist daher dadurch gekennzeichnet, dass mindestens ein Transfersubstrat überwiegend aus einem fluorfreien Polymer besteht.

Sofern beidseitig beschichtet wird, bietet es sich an, dasselbe Quellmittel für beide Seiten zu verwenden. Mithin entspricht das erste Quellmittel dem zweiten Quellmittel. "Entsprechend" bedeutet im einfachsten Fall, dass es sich bei dem ersten Quellmittel und dem zweiten Quellmittel um dieselbe chemische Substanz handelt. Allerdings werden die Quellmittel in der betrieblichen Praxis nicht als Reinstoffe eingesetzt, sondern in technischer Qualität. Dies bedeutet, dass das Quellmittel zusammen mit Verunreinigungen oder technisch bedingten Begleitstoffen eingesetzt wird, zum Beispiel 98 % Ethanol und 2 % Wasser, weil sich Wasser nicht vertretbaren Aufwand komplett aus dem Ethanol entfernen lässt. Wenn das erste Quellmittel in einer anderen technischen Qualität eingesetzt wird als das zweite Quellmittel, jedoch in beiden Fällen dieselbe Substanz enthalten ist, entspricht das erste Quellmittel dem zweiten Quellmittel im Sinne der hier verwendeten Terminologie. So können sich zwei Chargen Quellmittel mit unterschiedlichem Wassergehalt im Ethanol sich im Sinne der Erfindung entsprechen, obwohl beide Chargen nicht exakt identisch sind. Entscheidend ist, dass dieselbe Substanz, beispielweise Ethanol eingesetzt wird. Auf den unterschiedlichen Wassergehalt kommt es in dem Beispiel nicht an.

Analog bietet es sich an, dass das erste Polymer dem zweiten Polymer entspricht. Auf technisch bedingte Verunreinigungen im Polymer kommt es dabei nicht an. Polymere können auch dann einander entsprechen, wenn sie dieselbe Wiederholeinheit enthalten, aber unterschiedliche Kettenlängen aufweisen. Bevorzugt weisen das erste Polymer und das zweite Polymer dieselbe Wiederholeinheit auf.

Bei dem Polymer, was mit dem Quellmittel gequollen wird, handelt es sich vorzugsweise um ein ionenleitendes Polymer, also ein lonomer. Dementsprechend ist das erste Polymer und/oder das zweite Polymer ionenleitend. Die Verwendung von nicht ionenleitenden Polymeren als Haftvermittler zur Immobilisierung der Katalysatoren auf der Membran ist ebenfalls denkbar; jedoch ist im Interesse der Effizienz der so hergestellten Zelle davon abzuraten.

In dem Verfahren wird vorzugsweise ein kationisches Polymer eingesetzt und zwar möglichst universell. Vorzugsweise wird dasselbe kationische Polymer in der ersten und/oder zweiten Zusammensetzung als erstes bzw. zweites Polymer zwecks Immobilisierung der katalytisch aktiven Substanz verwendet. Ganz besonders bevorzugt werden kationische Polymere mit derselben Wiederholeinheit in den Zusammensetzungen und als Membranwerkstoff verwendet. Die Leitfähigkeit der Membran für Anionen wird durch das kationische Polymer entsprechend intrinsisch ermöglicht. Die Kettenlänge der kationischen Polymeren mit derselben Wiederholeinheit kann unterschiedlich sein.

Besonders bevorzugt ist, dasselbe kationische Polymer, was in der Anionenaustauschmembran enthalten ist, auch zur Immobilisierung der Katalysatoren auf der Membran zu verwenden. Dadurch wird die Anzahl der zu verarbeitenden Substanzen reduziert. Dementsprechend ist diese bevorzugte Variante des Verfahrens dadurch gekennzeichnet, dass die Anionenaustauschmembran ein kationisches Polymer enthält oder daraus besteht, und dass dieses kationisches Polymer identisch ist mit dem ersten Polymer und/oder mit dem zweiten Polymer.

Aus Umweltschutzgründen sollte ein fluorfreies kationisches Polymer verwendet werden. Das fluorfreie kationische Polymer kann sowohl als ionenleitfähiges Material in der Anionenaustauschmembran, also auch zur Immobilisierung der Katalysatoren auf der Membran genutzt werden.

Fluorfreie kationische Polymer sind bereits bekannt. Vorzugsweise werden solche fluorfreien lonomere eingesetzt, welche eine der folgenden drei Strukturen (I), (II), (III) aufweisen: 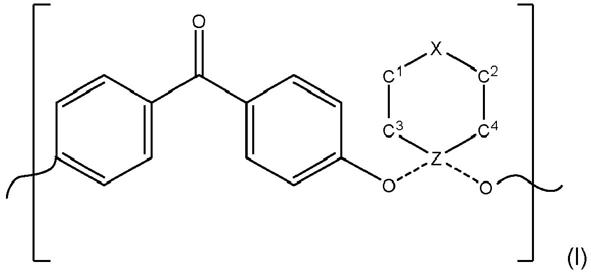
wobei in (I) X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome
und wobei in (I) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere C₁- bis C₄-Alkylreste substituiert sein können;

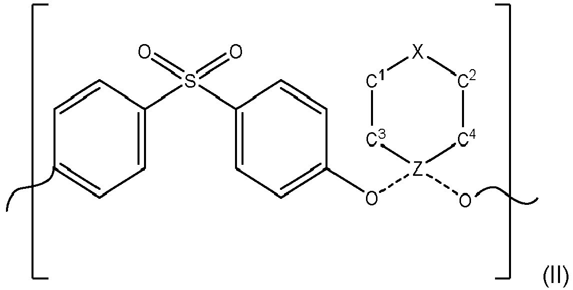

wobei in (II) X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und wobei in (II) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei der aromatische Sechsring in den Positionen 3 und 5 mit derselben oder verschiedenen C₁- bis C₄-Alkylreste substituiert sein kann, insbesondere mit einer Methyl-, iso-Propyl- oder tert-Butyl-Gruppe, wobei die Methylgruppe bevorzugt ist;

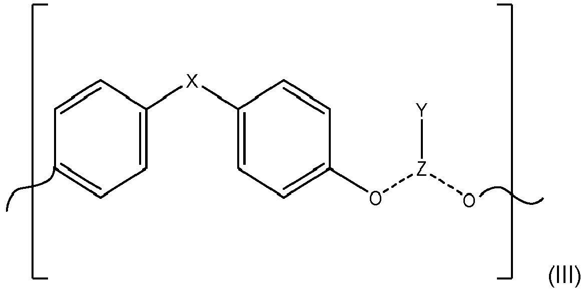

wobei in (III) X für eine Keton- oder Sulfon-Gruppe steht;
wobei in (III) Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist;
und wobei in (III) Y für ein Strukturelement steht, welches mindesten ein Stickstoffatom mit positiver Ladung umfasst, wobei dieses Stickstoffatom mit dem Strukturelement Z verbunden ist.

Die fluorfreien lonomere mit den Strukturen (I), (II) und (III) sind sowohl für den Einsatz in der Anionenaustauschmembran geeignet, als auch für die Immobilisierung der Katalysators auf der Membran. Zudem lassen sich diese lonomere hervorragend mit dem erfindungsgemäßen Prozess verarbeiten, insbesondere bei geringen Temperaturen unter 70°C. Diese Polymere der Strukturen (I), (II) und (III) sollten zumindest in der Zusammensetzung enthalten sein. Bekannt sind die lonomere aus den Patentanmeldungen EP3770201A1, EP4032934A1 bzw. EP4059988A1.

Die Verwendung des fluorfreien Polymers als Transfersubstrat ist besonders dann vorteilhaft, wenn das Transfersubstrat nicht wiederverwendet wird und mithin nach dem Abschälen verworfen wird. Fluorfreie Transfersubstrate aus PP, PE oder PET sind nämlich vergleichsweise einfach zu entsorgen bzw. zu recyceln und benötigen für ihre Herstellung keine Fluorkohlenwasserstoffe. Darüber hinaus sind PP, PE oder PET -Folien preisgünstiger als die herkömmlichen Transfersubstrate aus PTFE.

In einer besonders bevorzugten Ausführungsform wird das erfindungsgemäße Verfahren als Rolle-zu-Rolle-Prozess ausgeführt. Dies bedeutet, dass das die Ausgangsmaterialien zumindest teilweise bandförmig auf einer Spule bereitgestellt werden und das auch das Zielprodukt bandförmig auf einer Spule erhalten wird. Die bandförmigen Materialen bewegen sich während des Prozesses kontinuierlich von Rolle zur Rolle durch den Prozess hindurch. Der Prozess ist daher besonders produktiv. Konkret sieht die Rolle-zu-Rolle-Version des erfindungsgemäßen Prozess es vor, dass im Betrieb mindestens eine umlaufende Spule aufgewickelt oder abgewickelt wird, wobei die Spule ausgewählt ist aus der Gruppe umfassend die folgenden Spulen:
i) eine Spule, auf der die Anionenaustauschmembran bandförmig bereitgestellt wird;
ii) eine Spule, auf der die beschichtete Anionenaustauschmembran bandförmig erhalten wird;
iii) eine Spule, auf der ein Transfersubstrat bandförmig bereitgestellt wird.

Vorzugsweise werden zwei oder drei der oben genannten Spulen aufgewickelt bzw. abgewickelt. Im Rolle-zu-Rolle-Prozess erfolgen die Arbeitsschritte des Verfahrens in Richtung der bandförmigen Materialien entlang der Vorschubrichtung nacheinander; von globaler Perspektive aus gesehen geschehen die Schritte jedoch gleichzeitig, weil es ein kontinuierlicher Prozess ist.

Alternativ lässt sich der Prozess auch batchweise, mit nicht bandförmigen, unbewegten Materialien durchführen.

Vorteilhafterweise wird beim Rolle-zu-Rolle-Prozess das das Verpressen mit Hilfe eines ortsfesten Walzenpaares bewerkstelligt, wobei mindestens eine Walze des Walzenpaares auf einem bereits genannten bandförmigen Transfersubstrat wälzt oder rollt. Dadurch lässt sich die zum Verpressen benötigte Druckkraft kontinuierlich auf das Transfersubstrat aufbringen und so die Fertigungsgüte steigern.

Ein besonderer Vorteil des Prozesses ist, dass er - verglichen mit herkömmlichen decal-Prozessen - bei geringen Temperaturen durchgeführt werden kann. Deswegen kann insbesondere auf eine gesonderte Beheizung der Walzen verzichtet werden. In herkömmlichen decal-Prozessen werden regelmäßig beheizte Walzen eingesetzt, um das lonomer aufzuschmelzen. Dies ist hier dank des Quellens nicht notwendig. Eine bevorzugte Ausführungsform der Erfindung sieht es daher vor, dass die Walzen des Walzenpaares unbeheizt sind.

Beim Rolle-zu-Rolle-Prozess erfolgt das Abschälen mit Hilfe mindestens einer ortsfesten Schälrolle, wobei die Schälrolle auf einem bereits genannten bandförmigen Transfersubstrat rollt oder wälzt. Das Abschälen wird dadurch verstetigt, sodass die Produktivität und die Qualität steigt.

In dem erfindungsgemäßen Verfahren wird die Anionenaustauschmembran mit mindestens einer Zusammensetzung beschichtet, welche einen Elektrokatalysator enthält. Elektrokatalysatoren sind Substanzen, die in elektrochemischen Reaktionen katalytisch wirken oder so aktivierbar sind, dass sie katalytisch wirken. Nach dem derzeitigen Forschungstand lassen sich die folgenden Elemente in Reinform, als Oxid, als Hydroxid oder als Oxidhydroxid in dem Prozess verarbeiten: Iridium (Ir), Nickel (Ni), Cobalt (Co), Chrom (Cr), Eisen (Fe), Ruthenium (Ru), Kuper (Cu), Molybdän (Mo), Zink (Zn), Blei (Pb), Mangan (Mn), Wolfram (W), Platin (Pt), Schwefel (S), Zinn (Sn), Gold (Au), Silber (Ag), Palladium (Pd), Rhenium (Re), Rhodium (Rh). Diese Elemente kommen in Reinform oder als Oxid oder als Hydroxid oder als Oxidhydroxid jeweils einzeln oder in Kombinationen als Elektrokatalysator in Betracht.

Ganz besonders bevorzugt wird eine Zusammensetzung verarbeitet, die als Elektrokatalysator Platin oder Platinlegierung geträgert auf Kohlenstoff (Pt/C) oder ein Nickel-Eisen-(Oxid)Hydroxid (NiFeₐO_{b}H_{c}) enthält. Die Indices a, b und c stehen für reelle Zahlen im Intervall von 0 bis 8. Die Indices a, b und c können gleich oder unterschiedlich sein. Das Nickel-Eisen-Verhältnis in dem Nickel-Eisen-(Oxid)Hydroxid sollte etwa 3:1 betragen.

Das in dem Prozess eingesetzte Quellmittel wird so gewählt, dass es das Polymer bzw. lonomer in der Beschichtungszusammensetzung zumindest quillt. Da die in der Wasserelektrolyse eingesetzten lonomere prinzipbedingt eine hohe Widerstandsfähigkeit gegen Wasseraufnahme aufweisen müssen (vgl. EP3770201A1 und EP4032934A1), sind wässrige Quellmittel in der Regel nicht geeignet. Besser geeignet sind organische Quellmittel. Als besonders geeignet haben sich die folgenden Quellmittel erwiesen: Methyl-2-pyrrolidon (NMP), N,N-Dimethylformamid (DMF), N,N-Dimethylacetamid (DMAC), Dimethylsulfoxid (DMSO), Isopropanol (IPA), Methanol (MeOH), Ethanol (EtOH). Diese Quellmittel können einzeln oder gemischt eingesetzt werden. Besonders bevorzugt werden Dimethylsulfoxid (DMSO) und/oder Ethanol (EtOH) eingesetzt. Letztgenannte Quellmittel erfüllen ihren Zweck recht gut und sind darüber hinaus auch vergleichsweise menschenfreundlich, was ihre Handhabung und Verarbeitung vereinfacht.

Vorzugsweise wird das Quellmittel, seine Einsatzmenge und seine Kontaktzeit so gewählt, dass es das jeweilige Polymer nicht nur quillt, sondern auch anlöst. Unter Lösen ist das Aufheben der intermolekularen Bindungskräfte innerhalb des Polymers zu verstehen. Jedem Lösen des Polymers geht ein Quellen voran. Es ist daher oft eine Frage der Kontaktzeit wann das Quellen in ein Lösen des Polymers übergeht Anlösen sei hier als ein Lösen des Polymers in einer dünnen Grenzschicht des Kontakts zum Quellmittel definiert. Sofern das Polymer angelöst wird, lässt sich das Transferband besonders leicht abziehen. Eine bevorzugte Weiterbildung des Verfahrens sieht es demnach vor, dass das erste Quellmittel das erste Polymer zumindest teilweise löst und/oder dass das zweite Quellmittel das zweite Polymer zumindest teilweise löst.

Ganz besonders bevorzugt wird eine Kombinationen aus einem kationischen Polymer und einem organischen Substanz als Quellmittel verwendet, nämlich kationisches Polymer mit Struktur (I) oder (II) oder (III) wie oben definiert und als Quellmittel Dimethylsulfoxid und/oder Ethanol.

Das Masseverhältnis q/k zwischen Quellmittel und kationisches Polymer liegt vorzugsweise zwischen 0.01 und 1.5. Dabei versteht sich *q* als die Masse des auf das kationischen Polymer aufgetragenen Quellmittels und k als die Masse des kationischen Polymers. Ein geringer spezifische Quellmitteleinsatz ermöglicht eine Prozessierung ohne gesonderte Trocknung. Die Kombination aus kationisches Polymer mit Struktur (I) oder (II) oder (III) erlaubt die Verwendung geringer Mengen Quellmittel DMSO oder EtOH.

Im Sinne des erfindungsgemäßen Verfahrens muss die Anionenaustauschmembran nicht zwangsläufig direkt mit der Zusammensetzung beschichtet werden. Es ist auch denkbar, eine Anionenaustauschmembran zu verwenden, die bereits mit einer Vorbeschichtung versehen ist. Die Zusammensetzung wird dann auf die Vorbeschichtung aufgetragen. Zwischen der eigentlichen Anionenaustauschmembran und der katalytisch aktiven Beschichtung befindet sich dann die Vorbeschichtung. Die Vorbeschichtung kann die Haftung des Elektrokatalysators auf der Membran verbessern. Eine Variante des erfindungsgemäßen Verfahrens sieht es daher vor, dass die Anionenaustauschmembran mit mindestens einer Vorbeschichtung versehen bereitgestellt wird, dergestalt, dass die Zusammensetzung auf die Vorbeschichtung aufgetragen wird.

Die erfindungsgemäß beschichtete Anionenaustauschmembran kann in elektrochemischen Zellen verbaut werden, insbesondere als catalyst coated membrane (CCM). Bei der elektrochemischen Zelle kann es sich um einen AEM-Elektrolyseur oder um eine AEM-Brennstoffzelle handeln. Der Elektrolyseur kann zur Elektrolyse von Wasser oder zur Elektrolyse von Kohlenstoffdioxid eingesetzt werden.

Ein Ausführungsbeispiel eines erfindungsgemäßen Prozess soll nun anhand einer Zeichnung näher erläutert werden. Es zeigt:

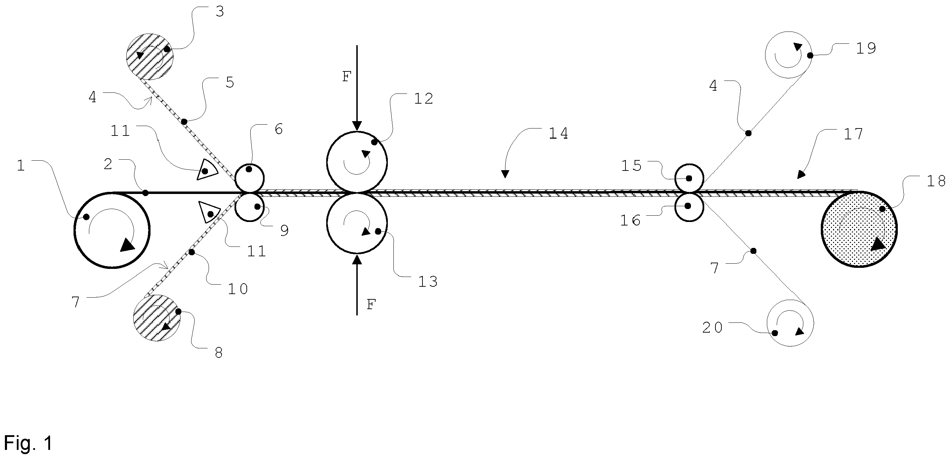

- **Figur 1:**: Schematische Darstellung eines Rolle-zu-Rolle-Prozesses.

Figur 1 zeigt den Ablauf den Ablauf eines erfindungsgemäßen Prozesses in schematischer Darstellung. Bei dem dargestellten Verfahren handelt es sich um einen Rolle-zu-Rolle-Prozess.

Auf einer ersten Spule 1 wird eine flache, bandförmige Anionenaustauschmembran 2 bereit gestellt. Die Anionenaustauschmembran 2 besteht vollständig aus einem Anionen leitenden, fluorfreien Polymer (lonomer). Die Anionenaustauschmembran 2 wird von der ersten Spule 1 abgewickelt.

Auf einer zweiten Spule 3 wird ein erstes Transfersubstrat 4 bereit gestellt. Bei dem ersten Transfersubstrat 4 handelt es sich um ein flaches Band aus Polyethylenterephthalat (Folie), welches einseitig mit einer ersten Zusammensetzung 5 beschichtet ist. Die erste Zusammensetzung 5 umfasst dasselbe fluorfreie, Ionen leitende Polymer (lonomer), aus dem auch die Anionenaustauschmembran 2 besteht und darin dispergiert eine erster Elektrokatalysator. Bei dem Elektrokatalysator handelt es sich um eine Substanz, welche die Elektrolyse von Wasser katalysiert. Genauer gesagt, katalysiert der in der ersten Zusammensetzung 5 enthaltene Elektrokatalysator die Kathodenreaktion (K) auf der Wasserstoffseite einer basischen Wasserelektrolyse.

Das erste Transfersubstrat 4 wird von der zweiten Spule 3 abgewickelt und mit Hilfe einer ersten Kontaktwalze 6 mit der Anionenaustauschmembran 2 kontaktiert.

Analog wird ein zweites Transfersubstrat 7 von einer dritten Spule 8 abgerollt und mit Hilfe einer zweiten Kontaktwalze 9 mit der Anionenaustauschmembran 2 kontaktiert. Das zweites Transfersubstrat 7 trägt eine zweite Zusammensetzung 10, welche dasselbe lonomer, aber einen anderen Elektrokatalysator enthält. Der andere Elektrokatalysator katalysiert die Anodenreaktion (A) auf der Sauerstoffseite.

Während das erste Transfersubstrat 4 mit der Oberseite der Anionenaustauschmembran 2 kontaktiert wird, wird das zweite Transfersubstrat 7 mit der Unterseite der Anionenaustauschmembran 2 kontaktiert. Die Kontaktierung mit den beiden Walzen 6, 9 erfolgt gleichzeitig an derselben Stelle des Verlaufs der Anionenaustauschmembran.

Unmittelbar bevor die beiden Transfersubstrate 4, 7 mit der Anionenaustauschmembran 2 kontaktiert werden, werden die beiden Zusammensetzungen 5, 10 jeweils mit einem Quellmittel 11 besprüht. Bei dem Quellmittel 11 handelt es sich um eine flüssige organische Substanz, welche das lonomer quillt. Für beide Zusammensetzungen 5, 10 wird dasselbe Quellmittel 11 verwendet. Es ist auch denkbar, für die beiden Zusammensetzungen ein unterschiedliches Quellmittel zu verwenden, ein erstes Quellmittel für die erste Zusammensetzung 5 und ein zweites Quellmittel für die zweite Zusammensetzung 10. Da aber in beiden Zusammensetzungen dasselbe ionenleitende Polymer enthalten ist, macht es auch Sinn, dasselbe Quellmittel 11 für beide Zusammensetzungen 5, 10 zu verwenden.

Die beiden Zusammensetzungen 5, 10 quellen nach dem Aufsprühen des flüssigen Quellmittels 11 an. Genauer gesagt, das in beiden Zusammensetzungen enthaltene lonomer quillt, da das Quellmittel 11 in das lonomer eindringt.

Mithilfe eines ortsfesten Walzenpaares 12 ,13 wird das erste Transfersubstrat 4 mit der ersten Zusammensetzung 5 und das zweite Transfersubstrat 7 mit der zweiten Zusammensetzung 10 mit der Anionenaustauschmembran 2 verpresst. Die beiden Walzen 12, 13 wälzen dabei auf der Schichtung aus den beiden Transfersubstraten 4, 7 und der dazwischen angeordneten Anionenaustauschmembran 2 ab. Dabei drücken die beiden Walzen 12, 13 mit einer Kraft F aufeinander, welche die beiden gequollenen Zusammensetzungen 5, 10 mit der Anionenaustauschmembran 2 verpresst. Die Kraft F wirkt senkrecht zu der Ebene, in der sich die Anionenaustauschmembran 2 erstreckt. Die Kraft wirkt durch die beiden Transfersubstrate 4, 7 hindurch. Die beiden Transfersubstrate 4, 7 isolieren die beiden Walzen des Walzenpaars 12, 13 von der Zusammensetzung 5, 10, sodass diese nicht verschmutzen.

Das Verpressen der beiden Zusammensetzungen 5, 10 mit der Anionenaustauschmembran 2 erfolgt bei Raumtemperatur. Die Walzen des Walzenpaars 12, 13 sind nicht beheizt.

Durch das Verpressen wird ein bandförmiges Sandwich 14 erhalten mit dem folgenden Schichtaufbau (von oben nach unten):
- Erstes Transfersubstrat 4
- erste Zusammensetzung 5
- Anionenaustauschmembran 2
- zweite Zusammensetzung 10
- zweites Transfersubstrat 7.

Aufgrund desselben lonomers in den beiden Zusammensetzungen 5 und 10 und in der Anionenaustauschmembran 2 ist der Übergang von der ersten Zusammensetzung 5 in die Anionenaustauschmembran 2 und weiter in die zweite Zusammensetzung 10 fließend: Im Prinzip wird der erste Elektrokatalysator auf der Oberseite der Anionenaustauschmembran 2 angereichert, währenddessen der zweite Elektrokatalysator auf der Unterseite der Anionenaustauschmembran 2 angereichert wird. Das lonomer immobilisiert die Katalysatorpartikel auf den beiden Seiten der Membran 2 und stellt gleichzeitig eine Anionen leitende Verbindung zwischen den Katalysatorpartikeln und durch die Membran 2 hindurch her.

Nach dem Verpressen der beiden Zusammensetzungen 5, 10 mit der Anionenaustauschmembran 2 werden die beiden Transfersubstrate 4, 7 nicht mehr benötigt. Sie werden mit Hilfe zweier Schälwalzen 15, 16 von dem Sandwich 14 abgezogen, sodass eine beidseitig mit Elektrokatalysator beschichtete Anionenaustauschmembran 17 zurück bleibt. Dabei handelt es sich um das Zielprodukt des Prozesses. Die beschichtete Anionenaustauschmembran 17 wird auf eine vierte Spule 18 aufgewickelt.

Die beiden abgeschälten Transfersubstrate 4, 7 werden ebenfalls auf eine fünfte bzw. sechse Spule 19, 20 aufgewickelt.

Wenn die erste Spule 1 leer ist, wird der Prozess gestoppt und die beiden Spulen 19, 20 mit dem abgeschälten Transfersubstraten 4, 7 verworfen. Da es sich dabei um PE-Folie handelt, lässt sich diese problemlos entsorgen. Die vierte Spule 18 mit der beschichteten Anionenaustauschmembran 17 ist das Zielprodukt im Gebinde. Optional kann die beschichtete Anionenaustauschmembran 17 beim Aufwickeln auf die vierte Spule 18 noch mit einer Schutzfolie versehen werden (nicht dargestellt). Die Schutzfolie verhindert eine Beschädigung der Beschichtung. Es bietet sich an, eines oder beide der abgeschälten Transfersubstrate 4, 7 als Schutzfolie zu verwenden, so wird Material eingespart und weniger Abfall erzeugt. Soll beispielsweise das zweite abgeschälte Transfersubstrat 7 als Schutzfolie verwendet werden, wird dieses nicht auf die sechse Spule 20 aufgewickelt sondern zusammen mit der beschichteten Anionenaustauschmembran 17 auf die vierte Spule 18 aufgewickelt.

Sodann wird eine frische erste Spule 1 mit unbeschichteter Anionenaustauschmembran 2 bereit gestellt sowie eine frische zweite Spule 3 mit frischem ersten Transfersubstrat 4 und frischer erster Zusammensetzung 5 sowie eine frische dritte Spule 8 mit frischem zweiten Transfersubstrat 7 und frischer zweite Zusammensetzung 10. Der Prozess beginnt vom neuen.

Mit Hilfe des so beschriebenen Rolle-zu-Rolle-Prozess wird eine flache, bandförmige Anionenaustauschmembran 2 rationell beidseitig mit Elektrokatalysator beschichtet, sodass eine flache, bandförmige, beidseitig beschichtete Anionenaustauschmembran 17 erhalten wird.

Diese wird zugeschnitten und sodann in einen Elektrolyseur so eingebaut, dass die Seite der beschichteten Anionenaustauschmembran 17, welche die Anodenreaktion (A) katalysiert, in Richtung der Anode ausgerichtet ist, währenddessen die andere Seite zur Kathode ausgerichtet ist (nicht dargestellt). Der so erhaltene Elektrolyseur dient zur basischen Wasserspaltung (AEMWE).

### Beispiele

Im Folgenden wird der Transferprozess für AEM-Anwendungen anhand des Beispiels einer Platin/Kohlenstoff-basierten Katalysatorschicht beschrieben. Damit werden die mit der Erfindung erzielten Effekte experimentell belegt.

### 1. Herstellung eines lonomers (nicht Teil der Erfindung)

Ein Anionen leitendes, kationisches Polymer wurde entsprechend Beispiel 3 der EP3770201A1 synthetisiert.

### 2. Herstellung einer Anionenaustauschmembran (nicht Teil der Erfindung)

Sodann wurde aus dem in 1. synthetisierten, kationischen Polymer eine Membran hergestellt, wie in Beispiel 4 der EP3770201A1 beschrieben.

### 3. Bereitstellen einer Zusammensetzung

Ein Schraubdeckelglas wurde bis zu einem Drittel mit Yttrium stabilisierte Zirkonoxid Mahlkugeln (Durchmesser 5 mm) gefüllt. Anschließend wurden 28 Gewichtsanteile einer lonomerlösung (20 wt% des in 1. synthetisierten kationischen Polymers in Dimethylsulfoxid) in das Schraubdeckelglas vorgelegt und mit 16.7 Gewichtsanteilen Dimethylsulfoxid, 13.3 Gewichtsanteilen Ethanol, 6.7 Gewichtsanteilen 2-Propanol und schließlich 20 Gewichtsanteilen Wasser verdünnt. Unter Sauerstoffausschluss wurden schließlich 13.3 Gewichtsanteile eines Platin auf Kohlenstoff Katalysators Pt/C ~ 1/1 hinzugefügt und mittels Rüttler vordispergiert. Die Tinte wurde im Schraubdeckelglas mittels Schüttelmischer (z.B. LAU Disperser) für 4 h dispergiert.

### 4. Beschichtung eines Transfersubstrats mit der Zusammensetzung

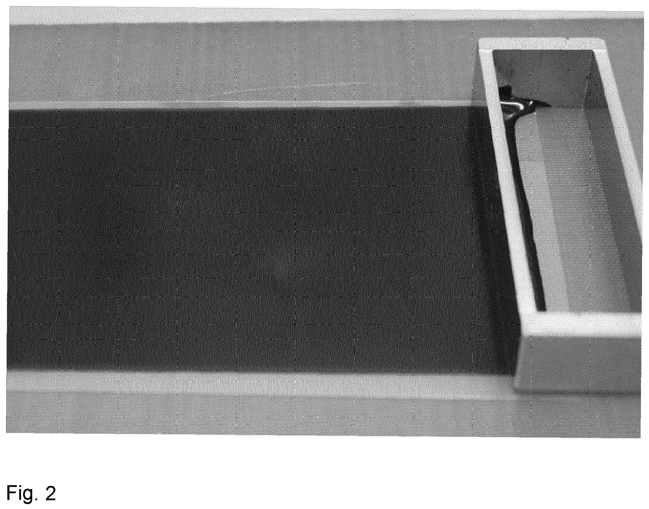

Die unter 3. bereitgestellte Zusammensetzung wurde mittels Kastenrakel auf eine handelsübliche PET-Folie (Melinex ST 506 von DuPontTeijin) aufgetragen. Figur 2 zeigt ein Foto davon.
- **Figur 2**:: Beschichtung des Transfersubstrats mit der Zusammensetzung

Es wurde ein Kastenrakel mit Rakelspalt von 50 µm gewählt. Die resultierende Schichtdicke nach der Trocknung (bei 20 °C für 16 h) betrug zwischen 8 µm und 15 µm.

### 5. Transferprozess

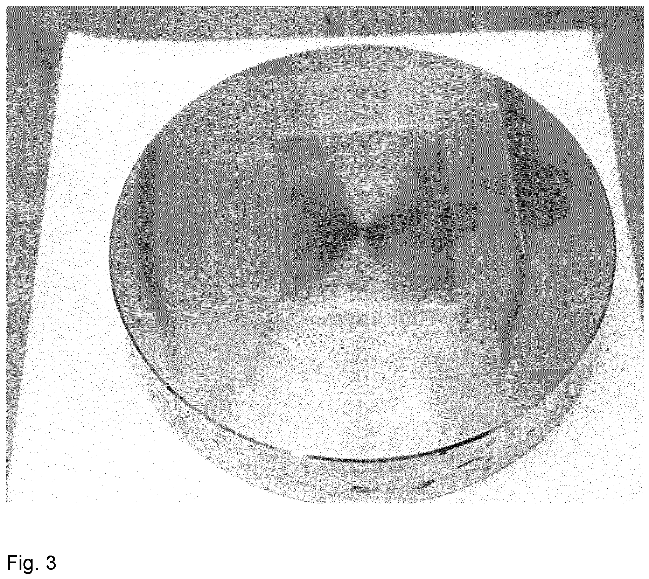

Um selektiv gezielt eine geometrische Form der Membran zu beschichten und somit gegebenenfalls Katalysator zu sparen kann diese Form aus dem beschichteten Substrat getrennt werden, um diese anschließend auf die Membran zu übertragen. Im Beispiel wurden Quadrate von 2 cm x 2 cm von dem am Vortag beschichteten Substrat ausgeschnitten um die Katalysatorschicht auf ein größeres, rechteckiges Stück der Membran zu übertragen. Zum einfacheren Handling wurde das Membranstück mittels transparentem Klebeband an den Rändern auf eine Edelstahlscheibe fixiert. Figur 3 zeigt ein Foto davon.
- **Figur 3**:: Membran (transparente Folie) fixiert auf Edelstahlscheibe

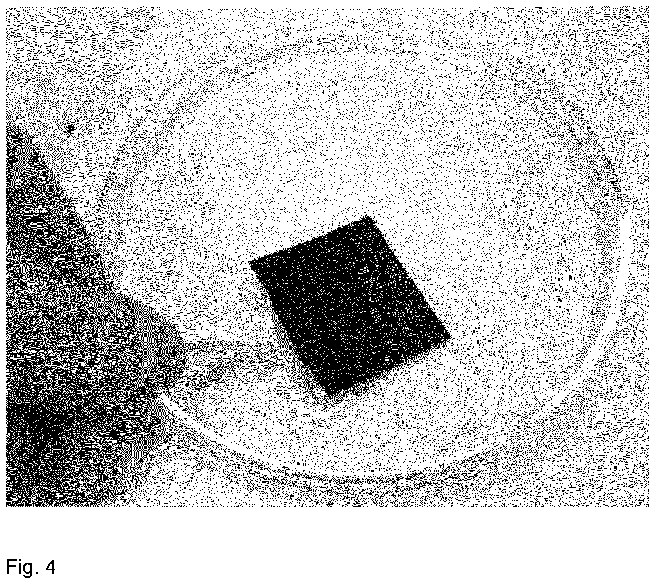

Das zugeschnittenes Stück der beschichteten PET-Folie wird für ca. 2 Sekunden in ein Gefäß mit Ethylalkohol getaucht, das übrige Quellmittel an der Transferfolie anschließend über eine der Ecken abgetropft. Ein Foto davon ist in Figur 4 abgebildet.
- **Figur 4:**: Benetzung der Katalysatorbeschichtung des beschichteten Transfersubstrat mit Quellmittel (hier: Ethylalkohol)

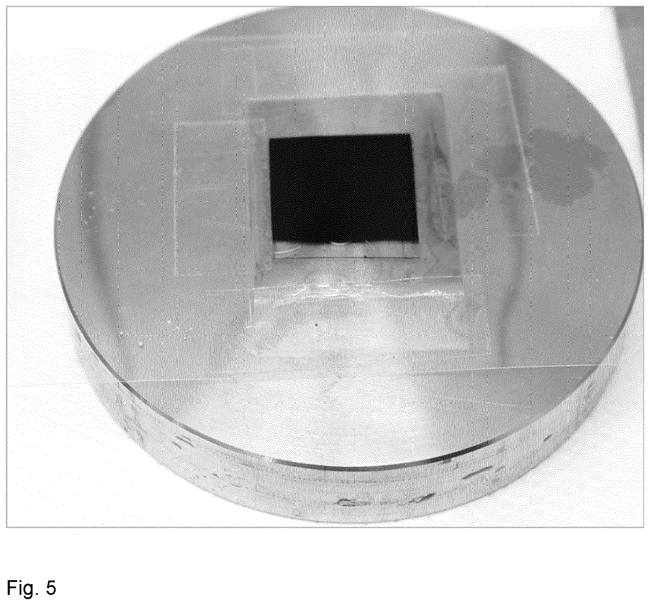

Das in Ethylalkohol getränkte, beschichtete Transfersubstrat wird mit Seite der Katalysatorschicht auf die zugeschnittene Membran gelegt (Foto in Figur 5).
- **Figur 5:**: Membran mit aufgelegtem beschichtetem Transfersubstrat, vor dem Verpressen

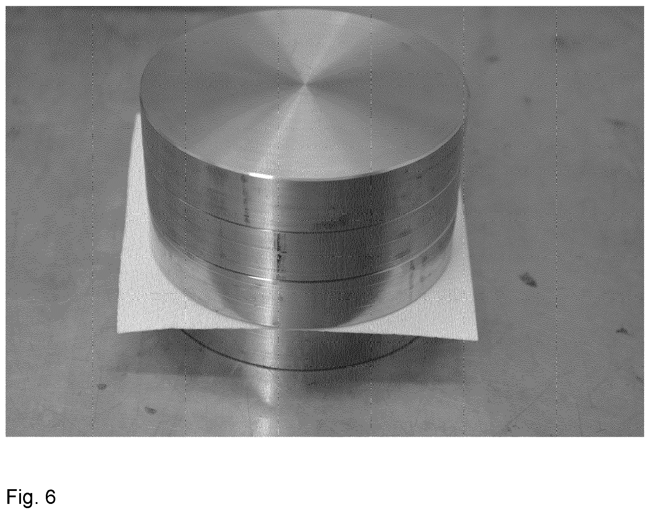

In diesem Beispiel wurde der Anpressdruck von 0.04 MPa mittels der Gewichtskraft von planaren Edelstahlscheiben erzielt, welche auf die Membran-Transfersubstrat-Assemblierung aufgestapelt wurden (Foto in Figur 6). Um überschüssiges Quellmittel aufzusaugen, wurde ein saugfähiges Gewebe (genauer gesagt ein Reinraumtuch) eingebracht. Im Beispiel wurde bei 20 °C ein Übertrag innerhalb von 60 Sekunden erzielt. Für den Übertrag bei anderen Temperaturen wurden die Edelstahlblöcke vor dem Übertragprozess entsprechend vortemperiert.

Durch die Kombination von Quellmittel und Anpressdruck wird die Katalysatorschicht vollständig auf die Membran übertragen.
- **Figur 6:**: Übertragung durch Verpressen

Nach der Übertragung der Katalysatorschicht auf die Membran wurde die PET-Folie abgezogen, wobei die Katalysatorschicht auf der Membranverblieb.

### 6. Übertrag bei unterschiedlichen Temperaturen

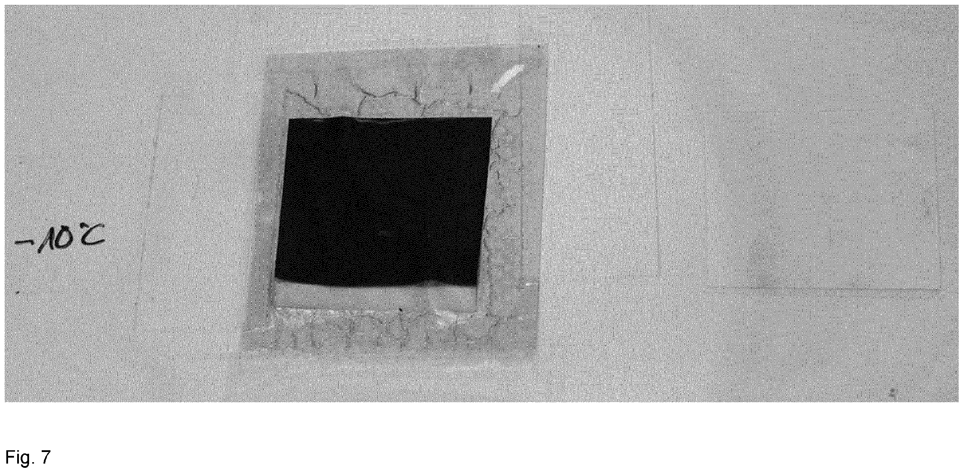

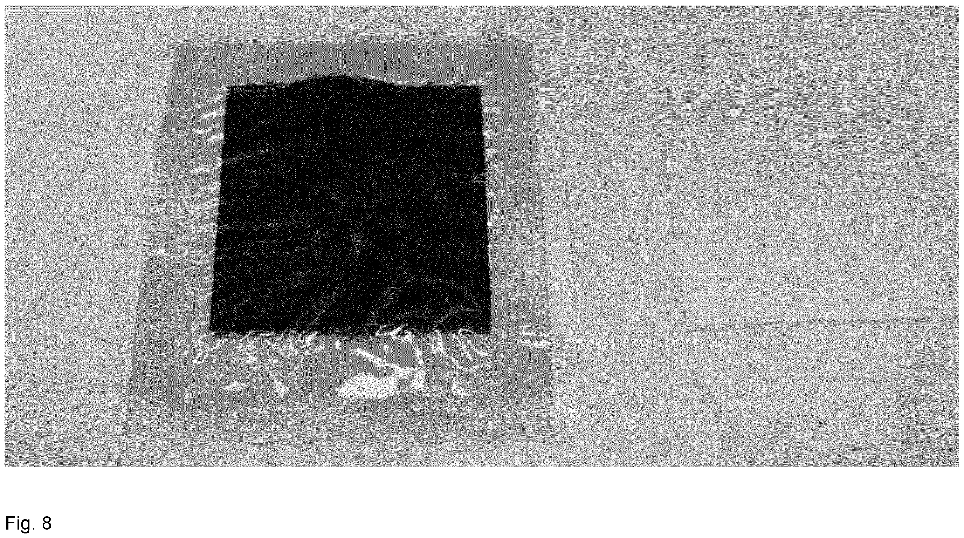

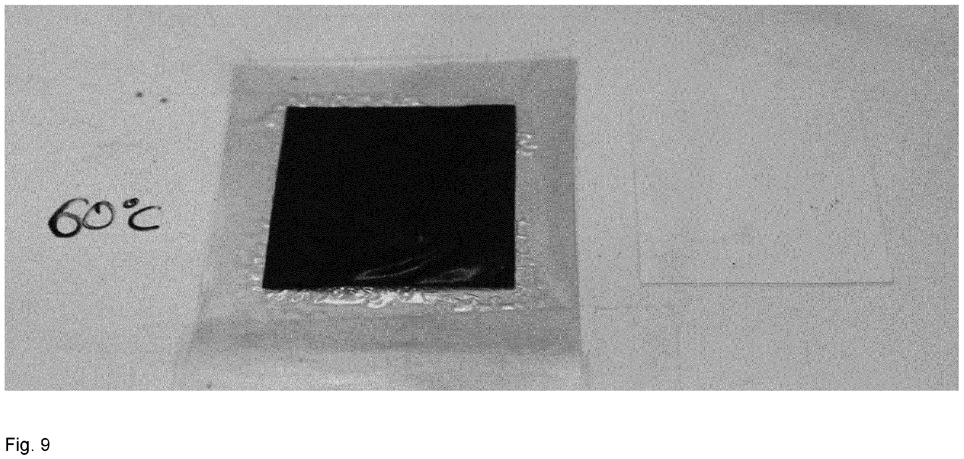

Der Übertrag kann generell in einem großen Temperaturbereich durchgeführt werden. Exemplarisch wurde ein erfolgreiche Übertrag bei -10°C (Versuch 1), 20°C (Versuch 2) und 60° C (Versuch 3) gezeigt. Bei keiner der genannten Temperaturen wurde die Glasübergangstemperatur des Anionen leitenden Polymers überschritten. Der Druck sowie die Zeit des Verpressens bei unterschiedlichen Temperaturen wurde für einen optimalen Übertrag angepasst. Die Versuchsparameter sind in Tabelle 1 niedergelegt; Fotographien der Proben zeigen die Figuren 7 bis 9

**Tabelle 1: Versuchsparameter**

| **Versuch-Nr.** | **1** | **2** | **3** |
|---|---|---|---|
| **Temperatur** | -10 °C | 20°C | 60°C |
| **Druck** | 93 kPa = 0.093 MPa | 40 kPa = 0.04 MPa | 40 kPa = 0.04 MPa |
| **Zeit** | 30 min | 60 sec | 10 sec |
| **Fotografie** | Figur 7 | Figur 8 | Figur 9 |

- **Figur 7:**: Erfolgreicher Übertrag bei -10 °C. Links: Katalysatorbeschichtete Membran. Rechts: Transferfolie ohne Katalysatorrückstände
- **Figur 8:**: Erfolgreicher Übertrag bei 20 °C. Links: Katalysatorbeschichtete Membran. Rechts: Transferfolie ohne Katalysatorrückstände
- **Figur 9:**: Erfolgreicher Übertrag bei 60 °C. Links: Katalysatorbeschichtete Membran. Rechts: Transferfolie ohne Katalysatorrückstände

### 7. Vergleichsversuch: Übertrag ohne Quellmittel (nicht erfindungsgemäß)

Ohne die Benetzung der Katalysatorschicht mit einem Quellmittel fand selbst unter deutlich höherem Druck in einer Plattenpresse 2 min bei 60 MPa) keine Übertragung der Katalysatorschicht statt.

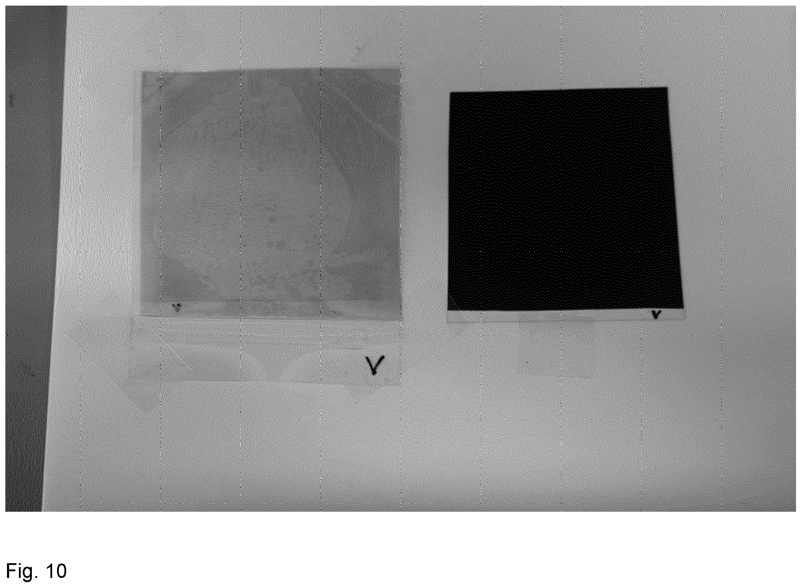

- **Figur 10:**: Erfolgloser Übertrag ohne Quellmittel. Links: Membran ohne Katalysatorschicht. Rechts: Noch vollständig mit Katalysator beschichtete Transferfolie

### 8. Testung einer katalysatorbeschichteten Membran in einer Elektrolysetestzelle

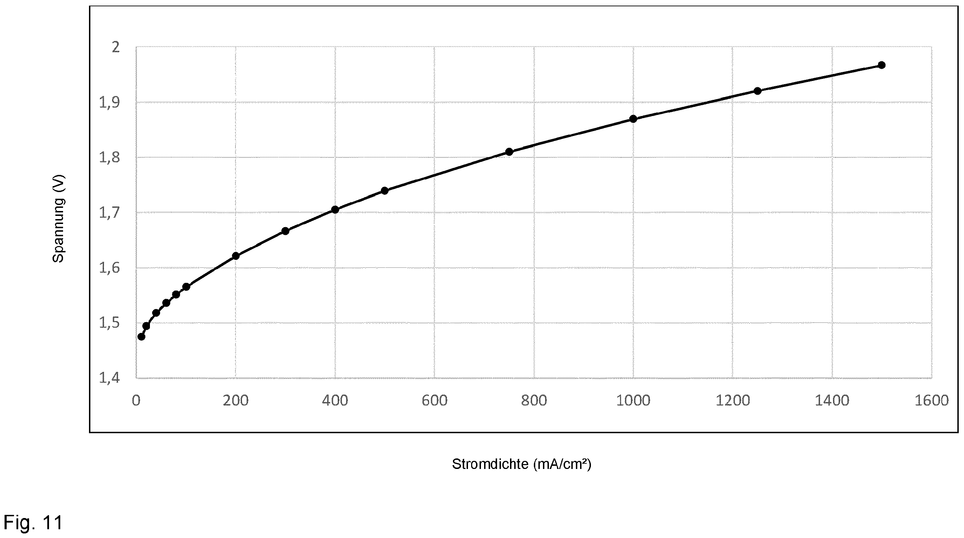

Analog zu Versuch 2 wurde eine Membran hergestellt und beschichtet; jedoch mit einem größeren Maß von 4 cm x 4 cm. Die beschichtete Membran mit aktiver Pt/C Katalysatorbeschichteter Fläche von 16 cm² wurde in eine Elektrolysetestzelle (BalticFuelCells GmbH, Germany) getestet. Die Membran wurde wie oben beschrieben beschichtet. Hierbei diente die Katalysatorschicht als Kathodenkatalysator. Anodenseitig wurde eine formstabiler, Edelmetall-freier Anodenkatalysator verwendet. Die Messzelle wurde während der Elektrolyseversuche auf 60 °C temperiert und anodensowie kathodenseitig mit 1 M KOH Lösung durchspült. Die charakteristische Strom-Spannungskennlinie ist in Figur 11 aufgezeichnet. Die Kurve der Figur 11 zeigt die benötigte Spannung bei einer extern angelegten Stromstärke. Bei einer konstanten Stromstärke (z.B. 500 mA/cm²) ist eine niedrige Spannung zu bevorzugen, da hierbei die benötigte elektrische Energie zur Produktion der gleichen Menge Wasserstoff, bei gleicher Herstellungsrate, sinkt und dadurch die Effizienz ansteigt.
- **Figur 11:**: Elektrolysemessung einer (erfindungsgemäß) mit Hilfe von Quellmittel beschichteten Membran

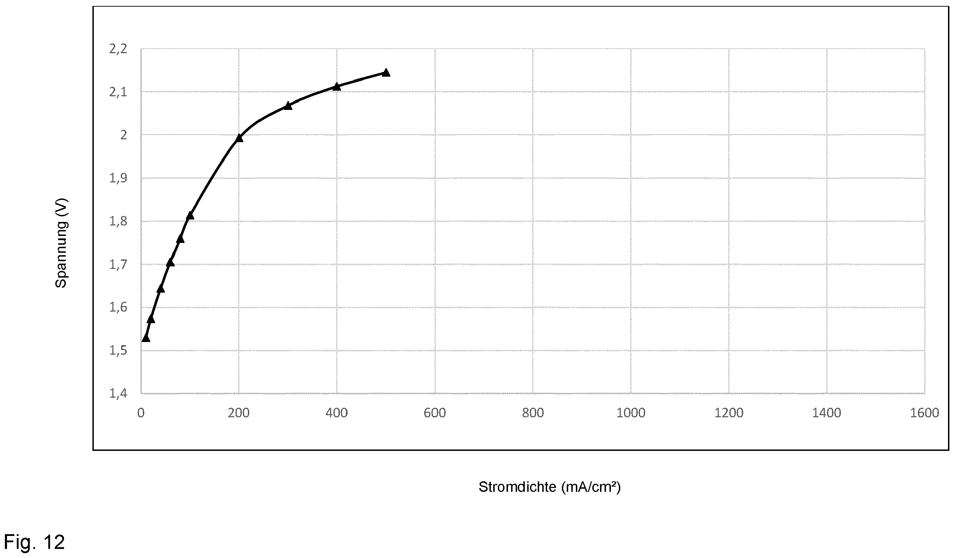

Zum Vergleich wurde die gleiche Testung mit gleicher Anordnung, aber mit einer analog zu im Vergleichsversuch 7 beschichteten Membran (4cmx4cm) mit gescheitertem Katalysatorübertrag durchgeführt. Diese Messwerte sind in Figur 12 graphisch dargestellt. Hierbei ist deutlich zu erkennen, dass die Spannung mit steigender Stromstärke wesentlich stärker ansteigt als bei erfolgreicher Übertragung der Katalysatorschicht mittels des beschriebenen Verfahrens. Stromdichten von über 500 mA/cm² sind ohne erfolgreiche Katalysatorübertragung in der getesteten Anordnung gänzlich unmöglich ohne die Sicherheitsschwelle von 2.15 V zu überschreiten.
- **Figur 12:**: Elektrolysemessung einer ohne Zuhilfenahme von Quellmittel (nicht erfindungsgemäß) beschichteten Membran

### 9. Fazit

Aus dem Vergleich der Strom-Spannungskennlinien der Figuren 11 und 12 ist ersichtlich, dass die erfindungsgemäß mit Hilfe von Quellmittel beschichtete Membran in der Wasserelektrolyse eine höhere Effizienz erzielt als die ohne Quellmittel beschichtete Membran.

### Bezugszeichen

- 1: erste Spule
- 2: Anionenaustauschmembran
- 3: zweite Spule
- 4: erstes Transfersubstrat
- 5: erste Zusammensetzung
- 6: erste Kontaktwalze
- 7: zweites Transfersubstrat
- 8: dritte Spule
- 9: zweite Kontaktwalze
- 10: zweite Zusammensetzung
- 11: Quellmittel
- 12: Walzenpaar
- 13: Walzenpaar
- 14: Sandwich
- 15: erste Schälwalze
- 16: zweite Schälwalze
- 17: beschichtete Anionenaustauschmembran
- 18: vierte Spule
- 19: fünfte Spule
- 20: sechse Spule
- F: Kraft

## Patentansprüche

1. Verfahren zum Beschichten von Anionenaustauschmembranen, umfassend die folgenden, nicht chronologischen Schritte:
a) Bereitstellen einer flachen Anionenaustauschmembran, welche einen Membranwerkstoff enthält oder daraus besteht;
b) Bereitstellen eines ersten flachen Transfersubstrats, welches zumindest einseitig mit einer ersten Zusammensetzung beschichtet ist, wobei die erste Zusammensetzung mindestens ein erstes Polymer und mindestens eine erste katalytisch aktive oder katalytisch aktivierbare Substanz enthält;
c) Bereitstellen eines ersten Quellmittels, welches zumindest teilweise in flüssiger Form vorliegt;
d) Auftragen des ersten Quellmittels auf die erste Zusammensetzung und/oder auf die Anionenaustauschmembran;
e) Verpressen der ersten Zusammensetzung mit der Anionenaustauschmembran in Gegenwart des ersten Transfersubstrats,
f) Abschälen des ersten Transfersubstrats von der ersten Zusammensetzung, sodass eine Anionenaustauschmembran erhalten wird, welche auf einer Seite mit der ersten Zusammensetzung beschichtet ist;
**dadurch gekennzeichnet,**
**dass** die Temperatur der ersten Zusammensetzung beim Verpressen zwischen -90°C und 100°C beträgt,
und **dass** das Verfahren noch den folgenden Schritt umfasst:
g) Quellen des ersten Polymers mit dem ersten Quellmittel.

2. Verfahren nach Anspruch 1, zusätzlich umfassend die folgenden, nicht chronologischen Schritte:
h) Bereitstellen eines zweiten flachen Transfersubstrats, welches zumindest einseitig mit einer zweiten Zusammensetzung beschichtet ist, wobei die zweite Zusammensetzung mindestens ein zweites Polymer und mindestens eine zweite katalytisch aktive oder katalytisch aktivierbare Substanz enthält;
i) Bereitstellen eines zweiten Quellmittels, welches zumindest teilweise in flüssiger Form vorliegt;
j) Auftragen des zweiten Quellmittels auf die zweite Zusammensetzung und/oder auf die Anionenaustauschmembran;
k) Quellen des zweiten Polymers mit dem zweiten Quellmittel;
l) Verpressen der zweiten Zusammensetzung mit der Anionenaustauschmembran in Gegenwart des zweiten Transfersubstrats, wobei die Temperatur der zweiten Zusammensetzung beim Verpressen zwischen -90°C und 100°C beträgt;
m) Abschälen des zweiten Transfersubstrats von der zweiten Zusammensetzung, sodass eine Anionenaustauschmembran erhalten wird, welche auf einer Seite mit der ersten Zusammensetzung beschichtet ist und welche auf der anderen Seite mit der zweiten Zusammensetzung beschichtet ist.

3. Verfahren nach Anspruch 2, **dadurch gekennzeichnet, dass** das Verpressen der ersten Zusammensetzung mit der Anionenaustauschmembran in Gegenwart des zweiten Transfersubstrats und das Verpressen der zweiten Zusammensetzung mit der Anionenaustauschmembran in Gegenwart des ersten Transfersubstrats erfolgt.

4. Verfahren nach einem der Ansprüche 1 bis 3, **dadurch gekennzeichnet, dass** das erste Quellmittel ausschließlich auf die erste Zusammensetzung aufgetragen wird, oder dass das erste Quellmittel ausschließlich auf die Anionenaustauschmembran aufgetragen wird, oder dass das erste Quellmittel sowohl auf die erste Zusammensetzung, als auch auf die Anionenaustauschmembran aufgetragen wird.

5. Verfahren nach einem der Ansprüche 1 bis 4, **dadurch gekennzeichnet, dass** mindestens ein genanntes Transfersubstrat überwiegend aus einem fluorfreien Polymer besteht.

6. Verfahren nach einem der Ansprüche 2 bis 5, **dadurch gekennzeichnet,**
**dass** das erste Quellmittel dem zweiten Quellmittel entspricht.

7. Verfahren nach einem der Ansprüche 2 bis 6, **dadurch gekennzeichnet,**
**dass** das erste Polymer und das zweite Polymer dieselbe Wiederholeinheit aufweisen.

8. Verfahren nach einem der Ansprüche 1 bis 7, **dadurch gekennzeichnet, dass** das erste Polymer und/oder das zweite Polymer ionenleitend ist.

9. Verfahren nach einem der Ansprüche 1 bis 8, **dadurch gekennzeichnet, dass** es sich bei mindestens einem der folgenden Stoffe um ein kationisches Polymer handelt:
∘ dem Membranwerkstoff;
∘ dem ersten Polymer;
∘ dem zweiten Polymer.

10. Verfahren nach Anspruch 9, **dadurch gekennzeichnet, dass** der Membranwerkstoff und das erste Polymer und/oder das zweite Polymer dieselbe Wiederholeinheit aufweisen.

11. Verfahren nach Anspruch 9 oder 10, **dadurch gekennzeichnet, dass** das kationisches Polymer fluorfrei ist.

12. Verfahren nach Anspruch 11, **dadurch gekennzeichnet, dass** das kationische Polymer mindestens eine Struktur enthält, welche ausgewählt ist aus der Gruppe bestehend aus den Strukturformeln (I), (II) und (III): 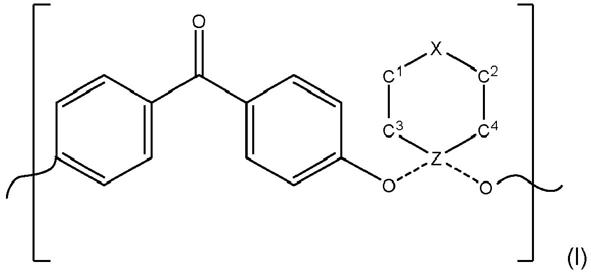 wobei in (I) X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome
und wobei in (I) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere C₁- bis C₄-Alkylreste substituiert sein können; 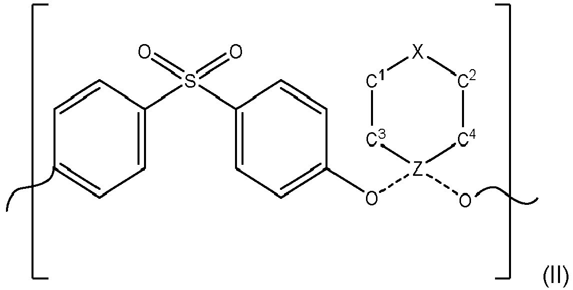
wobei in (II) X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und wobei in (II) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei der aromatische Sechsring in den Positionen 3 und 5 mit derselben oder verschiedenen C₁- bis C₄-Alkylreste substituiert sein kann, insbesondere mit einer Methyl-, iso-Propyl- oder tert-Butyl-Gruppe, wobei die Methylgruppe bevorzugt ist; 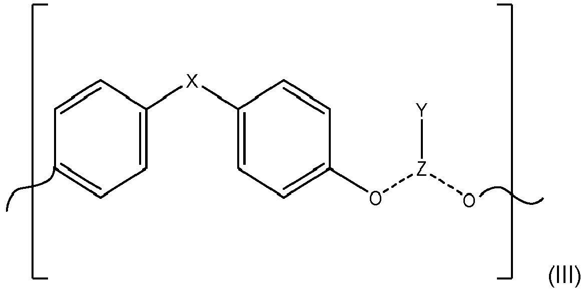
wobei in (III) X für eine Keton- oder Sulfon-Gruppe steht;
wobei in (III) Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist;
und wobei in (III) Y für ein Strukturelement steht, welches mindesten ein Stickstoffatom mit positiver Ladung umfasst, wobei dieses Stickstoffatom mit dem Strukturelement Z verbunden ist.

13. Verfahren nach einem der Ansprüche 1 bis 12, **dadurch gekennzeichnet, dass** es sich bei mindestens einem genannten Quellmittel um eine organisches Substanz handelt, oder dass das Quellmittel ausgewählt ist aus der Gruppe bestehend aus den folgenden Quellmitteln: Methyl-2-pyrrolidon (NMP), N,N-Dimethylformamid (DMF), N,N-Dimethylacetamid (DMAC), Dimethylsulfoxid (DMSO), Isopropanol (IPA), Methanol (MeOH), Ethanol (EtOH).

14. Verfahren nach den Ansprüchen 12 und 13, wobei die Masse des kationischen Polymers k beträgt, wobei die Masse des auf das kationische Polymer aufgetragene Quellmittel q beträgt, und wobei für das Verhältnis q/k Folgendes gilt: 0.01 < *q*/*k* < 1.5

15. Verfahren nach einem der Ansprüche 1 bis 14, **dadurch gekennzeichnet, dass** das erste Quellmittel das erste Polymer zumindest teilweise löst und/oder dass das zweite Quellmittel das zweite Polymer zumindest teilweise löst.

16. Verfahren nach einem der Ansprüche 1 bis 15, **dadurch gekennzeichnet, dass** mindestens ein genanntes Quellmittel in einem Gemisch vorliegt.

17. Verfahren nach einem der Ansprüche 5 bis 16, **dadurch gekennzeichnet, dass** mindestens ein genanntes Trägersubstrat nach dem Abschälen verworfen oder als Schutzfolie für die beschichtete Anionenaustauschmembran verwendet wird.

18. Verfahren nach einem der Ansprüche 1 bis 17, **gekennzeichnet durch** mindestens eine umlaufende Spule, die im Betrieb des Verfahrens aufgewickelt oder abgewickelt wird, wobei die Spule ausgewählt ist aus der Gruppe umfassend die folgenden Spulen:
i) eine Spule, auf der die Anionenaustauschmembran bandförmig bereitgestellt wird;
ii) eine Spule, auf der die beschichtete Anionenaustauschmembran bandförmig erhalten wird;
iii) eine Spule, auf der ein genanntes Transfersubstrat bandförmig bereitgestellt wird.

19. Verfahren nach Anspruch 18, **dadurch gekennzeichnet, dass** das Verpressen mit Hilfe eines ortsfesten Walzenpaares erfolgt, wobei mindestens eine Walze des Walzenpaares auf einem bereits genannten bandförmigen Transfersubstrat wälzt oder rollt.

20. Verfahren nach Anspruch 19, **dadurch gekennzeichnet, dass** die Walzen des Walzenpaares unbeheizt sind.

21. Verfahren nach einem der Ansprüche 18 bis 20, **dadurch gekennzeichnet, dass** das Abschälen mit Hilfe mindestens einer ortsfesten Schälrolle erfolgt, wobei die Schälrolle auf einem bereits genannten bandförmigen Transfersubstrat rollt oder wälzt.

22. Verfahren nach einem der Ansprüche 1 bis 21, **dadurch gekennzeichnet, dass** mindestens eine genannte katalytisch aktive oder katalytisch aktivierbare Substanz mindestens ein Element enthält, welches aus der Gruppe bestehend aus den folgenden Elementen ausgewählt ist: Iridium (Ir), Nickel (Ni), Cobalt (Co), Chrom (Cr), Eisen (Fe), Ruthenium (Ru), Kuper (Cu), Molybdän (Mo), Zink (Zn), Blei (Pb), Mangan (Mn), Wolfram (W), Platin (Pt), Schwefel (S), Zinn (Sn), Gold (Au), Silber (Ag), Palladium (Pd), Rhenium (Re), Rhodium (Rh) wobei das Element in seiner Reinform oder als Oxid oder als Hydroxid oder als Oxidhydroxid vorliegt.

23. Verfahren nach Anspruch 22, **dadurch gekennzeichnet, dass** es sich bei der katalytisch aktiven oder katalytisch aktivierbaren Substanz um Platin bzw. Platinlegierung geträgert auf Kohlenstoff (Pt/C) oder um ein Nickel-Eisen-(Oxid)Hydroxid (NiFeₐO_{b}H_{c}) handelt, wobei es sich bei den Indices a, b, und c jeweils um eine reelle Zahl aus dem Intervall von einschließlich 0 bis einschließlich 8 handelt.

24. Verfahren nach einem der Ansprüche 1 bis 23, **dadurch gekennzeichnet, dass** die Anionenaustauschmembran mit mindestens einer Vorbeschichtung versehen bereit gestellt wird, dergestalt, dass die Zusammensetzung auf die Vorbeschichtung aufgetragen wird.

25. Verfahren nach einem der Ansprüche 1 bis 24, **dadurch gekennzeichnet, dass** das Verpressen bei einem Druck von 0.001 MPa bis 0.15 MPa oder dass das Verpressen bei einem Druck von 0.01 MPa bis 0.05 MPa erfolgt.

26. Verfahren nach einem der Ansprüche 1 bis 25, **dadurch gekennzeichnet, dass** die Temperatur der ersten Zusammensetzung und/oder der zweiten Zusammensetzung beim Verpressen zwischen -30°C und 80°C beträgt oder dass die Temperatur der ersten Zusammensetzung und/oder der zweiten Zusammensetzung beim Verpressen zwischen -15°C und 70°C beträgt.
